# EUROPEAN PATENT APPLICATION

(11) **EP 4 174 124 A1**
(43) Date of publication of application: **03.05.2023**
(21) Application number: 21205636.0
(22) Date of filing: 29.10.2021
(51) Int. Cl.: C08K 3/016, C08K 5/00, C08K 9/02, C08K 9/10, C08L 67/02, C08K 5/5333, C08L 63/00

(54) **ENCAPSULATION OF FLAME RETARDANT AGENTS BY ATOMIC LAYER DEPOSITION FOR IMPROVED FLAME RETARDANT FORMULATIONS**

(71) Applicant: SHPP Global Technologies B.V., 4612 PX Bergen op Zoom (NL)
(72) Inventor: GOOSSENS, Johannes Gerardus Petrus, Bergen op Zoom (NL); KAMPS, Jan Henk, Bergen op Zoom (NL); VAN DE GRAMPEL, Robert, Bergen op Zoom (NL)
(74) Representative: Dehns

(57) **Abstract**

Provided are polymer compositions comprising: a polycondensation polymer; and
an encapsulated flame retardant agent, wherein the encapsulated flame retardant agent comprises a coating and a catalytic flame retardant core and wherein the coating has a thickness of from about 1 nm to about 100 nm observed using scanning electron microscopy. The catalytic flame retardant core may by coated via a process of atomic layer deposition.

## Description

### FIELD OF THE DISCLOSURE

The present disclosure relates to polymer compositions with improved flame retardant properties, and in particular to polymer compositions comprising encapsulated flame retardants configured to further improve flame retardant performance.

### BACKGROUND

Flame retardant additives may be incorporated to improve flame resistance for a number of applications. Many types of flame-retardants are known in the art. These additives interfere during heating, decomposition, ignition or flame spread during fire. Generally, flame retardants may slow down, impede, or even interrupt the combustion process by physical or chemical action. Examples of physical action are cooling (endothermic process of FR decomposition) or dilution of the combustible fraction in the substrate in the solid phase (alumina trihydrate and magnesium hydroxide) and/or in the gas phase (for example, formation of water/vapor) . Chemical action in the gas phase interferes with the combustion processes by e.g. interruption of the radical chain mechanism. The high energy H and OH radicals may be quenched by halogen halides from halogenated flame-retardants, metal halogen compounds from antimony trioxide, and phosphorus-containing fragments from phosphorus flame-retardants. In the solid phase, the flame retardant helps to form a carbonaceous layer at the surface of the polymer by dehydration, formation of double bonds, thus initiating cyclization and cross-linking (phosphorus, nitrogen compounds, intumescent systems). Unfortunately, certain flame retardant additives, have been found to have a detrimental impact on certain properties such as impact strength, wear, and heat distortion temperature (HDT). It is a challenge to identify compositions that have a good balance of among these properties while also achieving robust flame performance. Moreover, environmental concerns have discouraged the use of halogenated FR agents. Non-halogenated, phosphorus-based FRs are increasing in popularity over growing global health and environmental concerns with halogenated materials. During compounding or molding, however, many of the prominent phosphorous-based FRs are susceptible to preliminary reactions that can result in increased wear and poor performance. There remains a need in the art for more safe, effective and environmentally benign FR alternatives that are designed to pass even the most rigorous flammability tests while also exhibiting hydrolytic stability, better dispersion/compatibility, suppression of preliminary (toxic) gas release, and/or improved handling.

### SUMMARY

The present disclosure relates to a polymer composition comprising: a polycondensation polymer; and an encapsulated flame retardant agent, wherein the encapsulated flame retardant agent comprises a coating and a catalytic flame retardant core and wherein the coating has a thickness of from about 1 nm to about 100 nm observed using scanning electron microscopy.

In further aspects, the present disclosure relates to polymer composition comprising: from about 0.1 wt. % to about 94 wt. % of a polycondensation polymer; and from about 5 wt. % to about 25 wt. % of an encapsulated flame retardant agent, wherein: the encapsulated flame retardant agent comprises a silica coating and a catalytic flame retardant core, the silica coating has a thickness of from about 1 nm to about 100 nm, a ratio of phosphorus to silica is from about 5:1 to 100:1, and wherein the combined weight percent value of all components does not exceed 100 wt. %, and all weight percent values are based on the total weight of the polymer composition. The silica coating may be deposited via a process of atomic layer deposition.

The above described and other features are exemplified by the following drawings, detailed description, examples, and claims.

### BRIEF DESCRIPTION OF THE DRAWINGS

The accompanying figures, which are incorporated in and constitute a part of this specification, illustrate several aspects and together with the description serve to explain the principles of the disclosure.
FIG. 1 shows Table 1 presenting an overview of the encapsulated agent formulations prepared for the analysis of the sample composition by XRF
FIG. 2 shows Table 2 presenting average Al, Si, P, and S content and ratios for silica coated samples.
FIG. 3 shows Table 3 presenting an overview of materials used for the compounding experiments.
FIG. 4 shows Table 4 presenting the formulations comprising alumina-passivated Exolit^{™} OP 1240 flame retardant additive.
FIG. 5 is a graphical representation of torque development as a Function of Time for compounds with different type and concentrations of alumina-Passivated Exolit^{™} OP1240 flame retardant additive.
FIG. 6 shows Table 5 presenting formulations comprising silica-passivated Exolit^{™} OP 1240 flame retardant additive.
FIG. 7 is a graphical representation of the torque build-up as a result of the cross-linking reaction for the systems as given in Table 5.
FIG. 8 shows Table 6 presenting formulations comprising silica-passivated Exolit^{™} OP1240 flame retardant additive at 5 wt. %.
FIG. 9 is a graphical representation of the torque build-up as a result of the cross-linking reaction for the systems as given in Table 6.
FIG. 10 is a graphical representation of the influence of the screw speed on FR agent passivation.
FIG. 11 shows Table 7 presenting comparative formulations with encapsulated FR agent via sol-gel method.
FIG. 12 is a graphical representation of the screw torque as a function of time for Comparative Examples C1-C4.

### DETAILED DESCRIPTION OF ILLUSTRATIVE EMBODIMENTS

Different additives may be introduced to a polymer system to alter the physical properties of the thermoplastic resin. Flame retardant additives have been developed for decades to reduce fire damage by either inhibiting ignition or reducing flame spread in the event that ignition does occur. In order to ignite, a polymeric material must first undergo some form of degradation. As they thermally decompose, polymers break down into constituent molecules and free radicals, which enter the vapor phase and combust with atmospheric oxygen as long as the temperature is above the ignition temperature or a suitable ignition source is present (for example, a spark). Combustion is exothermic, recycling thermal energy back into the underlying material, resulting in more material decomposition, feeding the combustion zone with fuel. The key region is the interface between the flame and the solid polymer. It is in this region that the temperature is high enough to start the degradation reactions of the polymer and any additives that may be present. At this point, volatile species will escape into the flame, and heavier degradation products will remain to further degrade into more volatiles or a solid char.

Interrupting the degradation at the flame-to-polymer interface is the primary goal of flame retardant additives or flame retardants (FR). Various FR perform differently depending on the burning characteristics of the base material. For example, thermoplastics typically melt when exposed to the heat of fire, whereas cellulose will simply combust, decomposing into combustible gases, smoke, and char. Improving char formation, suffocating the flame by removing reactive radical species, or reducing the heat available for further degradation are all mechanisms employed by current flame retardants.

The increased use of plastics as well as other flammable materials that may be environmentally damaging and result in increased costs to repair damage resulting from fires. Unfortunately, regulations intended to improve risks associated with flammable materials may be reducing fire safety. As an example, halogenated flame retardants are very effective for reducing flame ignition, but are heavily regulated and considered environmentally detrimental because of the potential of toxic gas release.

Non-halogenated, phosphorous-based flame retardants have become increasingly desirable because of the health and environmental shortcomings of halogenated FR agents. Elemental red phosphorus, inorganic phosphates, organic phosphorus-based materials, and chloro-organophosphates are the four main types of phosphorus-based flame retardants. Phosphorus is very effective in materials that include oxygen or nitrogen because it acts in the condensed phase and is directly involved in char formation. Acids formed from the decomposition of phosphate salts or phosphate esters react with hydroxyl groups of a matrix polymer to catalyze char formation. Molecules such as pentaerythritol or melamine can be used in conjunction with phosphorus to promote phosphorylation and encourage char formation when this cannot occur with the polymer directly. It is also possible that phosphorus-based FR may also be used in the gas phase via radical scavenging.

Certain prominent phosphorus-based FR agents however may suffer from preliminary reactions in polymer systems, particularly those including higher amounts of glass fiber or those processed at elevated temperatures according to the polymer base resin (such as, for example, aliphatic polyamides (PA-6 and PA-6,6), aromatic polyamides (PA-6T), and polyesters (such as PBT)). As such, the use of phosphorus-based FR agents in these cases requires adherence to strict compounding or processing protocols including keeping the moisture level low, polymer pre-drying, keeping residence time as short as possible, avoiding high shear force, using corrosion resistant steels, and/or adding anti-corrosion additives or acid scavengers. These protocols may strongly limit the applicable processing window for the compositions. Molding is similarly hampered and subject to side reactions that can cause increased wear (corrosion) of the compounding screws or early mold replacement. These are examples of issues that may arise with FR agents based on polyphosphates with respect to unwanted side-reactions during the use of the FR agents in formulations (in the compounding process, part molding or during end-use), before the FR agents should become active. Similar concerns are not limited to FR agents based on polyphosphate chemistry, but are known for other chemistries.

Aluminum polyphosphate (Clariant's Exolit^{™} OP) is a known halogen-free flame retardant system for polybutylene terephthalate and polyamide over many years, sometimes combined with a synergist such as melamine compounds. It belongs to the so-called group of Phosphorus-Nitrogen (P-N) FR agents and offers a strong reduction in heat release and smoke density by intumescence (they form a viscous swollen char that thermally insulates and slows down diffusion of volatile combustible products to a flame).

A commercially available example of an intumescent system is Exolit^{™} OP 1240, which is a flame retardant based on diethyl-phosphinate, a thermally stable white solid without any hazard classification or labeling.

Another commercially available example is Exolit^{™} OP 1230, a white, fine-grained non-hygroscopic powder that is insoluble in both water and organic solvents. Clariant's Exolit^{™} OP flame retardants for poly(amides) (for example, PA-6, PA-6,6) are based on aluminum diethyl-phosphinate (= DEPAL). The pure substance DEPAL is available as Exolit^{™} OP 1230 and available in combination with synergists as Exolit^{™} OP 1340 types.

As provided herein, these FR additives are non-hygroscopic, insoluble in water and organic solvents; highly efficient due to their high phosphorus content; UL 94 V-0 rating down to 0.4 mm thickness; suitable for PET sheet extrusion; suitable for both glass fiber reinforced and unreinforced grades. The additives are generally desirable as they provide flame retardant properties and exhibit good physical and electrical properties, as well as good colorability and versatility with synergists. During the compounding of formulations with commercially available Exolit^{™} FR agents, preliminary reactions may be initiated resulting in an increased wear or corrosion for formulations having higher amounts of glass fibers (greater than 30 wt. % glass fiber).

However, very rigorous conditions are required during compounding and molding of polymer compounds comprising these commercially available phosphorus FR agents. For example, these conditions included reducing the residence time, avoiding high shear forces, keeping moisture level low by pre-drying components, processing at the lowest temperatures possible, using corrosion resistant steels for the compounder screw and housing and adding anti-corrosion additives / acid scavengers.

The present disclosure provides compositions exhibiting improved FR performance, hydrolytic stability, and dispersion. The compositions incorporate an encapsulated FR additive configured to suppress unwanted side-reactions during compounding and molding by passivating the active surface of the FR agent particle (in solid and/or liquid form) for a certain time/temperature window without negatively impacting the efficiency of the flame retardant action during a fire event. The present disclosure focuses on the use of aluminum diethyl-phosphinate-based (DEPAL) additive (commercial name: Exolit^{™} OP 1240 from Clariant) as an FR agent for the use in PBT and PA and involves passivating the additive's surface acidic functional groups by an atomic layer deposition (ALD) method. In various aspects, compositions of the present disclosure combine a polycondensation polymer and a silica or alumina encapsulated Exolit^{™} OP 1240 flame retardant additive. In yet further aspects, the disclosed compositions comprise a polycondensation polymer and an encapsulated flame retardant agent, wherein the encapsulated flame retardant agent comprises a coating and a catalytic flame retardant core and wherein the coating has a thickness of from about 1 nm to about 100 nm observed using scanning electron microscopy. The coating may be applied via a suitable method of atomic layer deposition such that the layer thickness is less than 100 nm.

Without wishing to be bound by any particular theory, the onset of the reactivity of the encapsulated flame retardant agent may be systematically delayed by increasing the thickness of the layer applied via atomic layer deposition. As such, reactivity of the encapsulated flame retardant agent is slowed down thereby reducing unwanted side-reactions. For example, but not limited to, the passivated behavior of the encapsulated flame retardant additive may be demonstrated in a dynamically cross-linked polymer system. That is, in some aspects, the present disclosure demonstrates the disclosed passivating effect by analyzing the occurrence of cross-linking where two types of ALD coatings (alumina and silica) are applied to Exolit^{™}, which may be used as a transesterification catalyst for the formation of a cross-linked PBT using epoxies as the cross-linking or coupling/coupler agent. According to the present disclosure the onset of the cross-linking reaction may be systematically delayed by increasing the (ALD) layer thickness. Such behavior establishes the passivation of the FR agent because the cross-linking is slowed down as evidenced by a shift in torque development of the cross-linked composition.

Generally, compositions of the present disclosure may comprise a polycondensation polymer and an encapsulated flame retardant agent comprising a coating and a catalytic flame retardant core. The coating may be deposited via an ALD process such that the coating has a thickness of from about 1 nm to about 100 nm, or from about 0.3 nm to about 50 nm, or from about 0.35 nm to about 40 nm.

In certain aspects, the composition comprises a polycondensation polymer and encapsulated flame retardant agent combined to form a dynamically cross-linked composition. The polycondensation polymer and encapsulated flame retardant agent may be combined with a coupler component comprising a plurality of epoxy-functionalized compounds to provide a dynamically cross-linked composition. The dynamically cross-linked composition may demonstrate the passivated behavior of the encapsulated flame retardant agent as evidenced by a shift in torque development of the composition.

The present disclosure may be understood more readily by reference to the following detailed description of desired embodiments and the examples included therein. In the specification and the claims that follow, reference will be made to a number of terms that have the following meanings.

Described herein, *inter alia,* are methods of making compositions, i.e., dynamically covalently cross-linked polymer compositions. These compositions are advantageous because they can be prepared more readily than covalently cross-linked or cross-linkable polymer compositions previously described in the art.

### Definitions

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing. All publications, patent applications, patents and other references mentioned herein are incorporated by reference in their entirety. The materials, methods, and examples disclosed herein are illustrative only and not intended to be limiting.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any impurities that might result therefrom, and excludes other ingredients/steps.

As used herein, the terms "about" and "at or about" mean that the amount or value in question can be the value designated some other value approximately or about the same. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Numerical values in the specification and claims of this application, particularly as they relate to polymers or polymer compositions, oligomers or oligomer compositions, reflect average values for a composition that may contain individual polymers or oligomers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

As used herein, "Tₘ" refers to the melting point at which a polymer, or oligomer, completely loses its orderly arrangement. As used herein, "T_{c}" refers to the polymer's crystallization temperature. The terms "Glass Transition Temperature" or "T_{g}" refer to the maximum temperature at which a polymer will still have one or more useful properties. These properties include impact resistance, stiffness, strength, and shape retention. The T_{g} therefore may be an indicator of its useful upper temperature limit, particularly in plastics applications. The T_{g} may be measured using a differential scanning calorimetry method and expressed in degrees Celsius.

As used herein, "cross-link," and its variants, refer to the formation of a stable covalent bond between two polymer chains. This term is intended to encompass the formation of covalent bonds that result in network formation. The term "cross-linkable" refers to the ability of a polymer to form such stable covalent bonds.

As used herein, "pre-dynamic cross-linked polymer composition" refers to a mixture comprising all the required elements to form a dynamic cross-linked polymer composition, but which has not been cured sufficiently to establish the requisite level of cross-linking for forming a dynamic cross-linked polymer composition. Upon sufficient curing, for example, heating to temperatures up to about 320 °C, a pre-dynamic cross-linked polymer composition may convert to a dynamic cross-linked polymer composition. In some embodiments, sufficient curing may occur, for example, by heating to a temperature between 150 °C and 270 °C to convert the pre-dynamic cross-linked polymer composition to a dynamic cross-linked polymer composition.

As used herein, "dynamic cross-linked polymer composition" refers to a class of polymer systems that include dynamically, covalently cross-linked polymer networks. At low temperatures, dynamic cross-linked polymer compositions behave like classical thermosets, but at higher temperatures, for example, temperatures up to about 320 °C, it is theorized that the cross-links have dynamic mobility, resulting in a flow-like behavior that enables the composition to be processed and re-processed. Dynamic cross-linked polymer compositions incorporate covalently cross-linked networks that are able to change their topology through thermally activated bond exchange reactions. The network is capable of reorganizing itself without altering the number of cross-links between its chains of chain segments. At high temperatures, dynamic cross-linked polymer compositions achieve transesterification rates that permit mobility between cross-links, so that the network behaves like a flexible rubber. At low temperatures, exchange reactions are very slow and dynamic cross-linked polymer compositions behave like classical thermosets.

Described herein are methods of preparing dynamic cross-linked polymer compositions including one or more networking additives. In one embodiment, a polycondensation polymer comprising a polyester, an encapsulated flame retardant agent, and a coupler component comprising at least two epoxy (or other reactive) groups may be reacted. The reaction may also be performed in the presence of at least one catalyst that promotes the formation of the pre-dynamic cross-linked composition. According to these methods, a coupler component, a polyester component, a non-networking additive, and a catalyst (if present) may be reacted or combined.

In certain aspects, the reacting may occur for less than about 7 minutes so as to form the pre-dynamic cross-linked polymer composition. In yet other aspects, the reaction occurs for less than about 2.5 minutes. In still other aspects, the reacting occurs for between about 10 minutes and about 15 minutes. In some embodiments, the reacting occurs at temperatures of up to about 320 °C to form the pre-dynamic cross-linked polymer composition. In yet other embodiments, the reacting may occur at temperatures between about 40 °C and about 320 °C. In other embodiments, the reacting occurs at temperatures between about 190 °C and about 290 °C. In some embodiments of the present disclosure, the reaction occurs at a temperature that is less than the temperature of degradation of the polycondensation polymer (or polyester). In one example, where the polyester component is PBT, the reacting step may occur at about 240 °C to 260 °C, below the degradation temperature of PBT.

The reacting step so as to form a pre-dynamic cross-linked polymer composition can be achieved using any means known in the art, for example, mixing, including screw mixing, blending, stirring, shaking, and the like.

### Polycondensation Polymer

A polycondensation polymer may refer to a polymer formed from repeated condensation reactions. A polymer composed of at least one type of monomer having not less than two condensable functional groups, the monomers being bound via the binding of the functional groups. Such monomers may be composed of an aliphatic hydrocarbon to which the functional groups are directly bound or composed of an aromatic hydrocarbon to which the functional groups are directly bound. Polycondensation polymers may have a structure in which aliphatic hydrocarbon groups are bonded via the functional groups, such as an aliphatic polyester, aliphatic polyamide and aliphatic polycarbonate. Aromatic polycondensation polymers may include polymers having a structure in which aromatic hydrocarbon groups are bonded via the functional groups, such as an aromatic polyester and an aromatic polyamide.

The polycondensation polymer mentioned above may be a homopolymer or a copolymer, or alternatively, a copolymer having different bonds such as an ester bond, amide bond, and carbonate bond arranged at random or en bloc. Suitable examples of such a copolymer include polyester carbonates and polyester amides. Examples of aliphatic/aromatic polyester include a polyethylene terephthalate resin.

In certain aspects, the polycondensation polymer is a polyester. Present in the compositions described herein are polymers that have ester linkages, i.e., polyesters. The polymer can be a polyester that includes ester linkages between monomers. The polymer can also be a copolyester, which is a copolymer comprising ester and other linkages and.

The polycondensation polymer may comprise ester linkages and can be a polyalkylene terephthalate, for example, poly(butylene terephthalate), also known as PBT, which has the structure shown below: 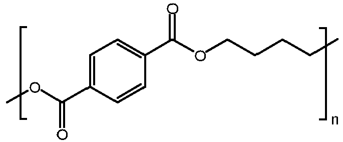 where n is the degree of polymerization, and can have a value as high as 1,000. The polymer may have a weight average molecular weight of up to 100,000 grams per mol (g/mol).

The polymer having ester linkages can be an oligomer containing ethylene terephthalate, described herein as an ET-oligomer, which has the structure shown below: 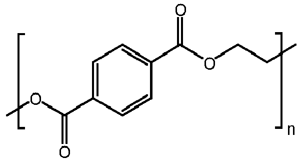 where n is the degree of polymerization, and can have a value up to 1000. The ethylene terephthalate oligomer may have an intrinsic viscosity between 0.09 dl/g and 0.35 dl/g

The polymer having ester linkages can be PCTG, which refers to poly(cyclohexylenedimethylene terephthalate), glycol-modified. This is a copolymer formed from 1,4-cyclohexanedimethanol (CHDM), ethylene glycol, and terephthalic acid. The two diols react with the diacid to form a copolyester. The resulting copolyester has the structure shown below: 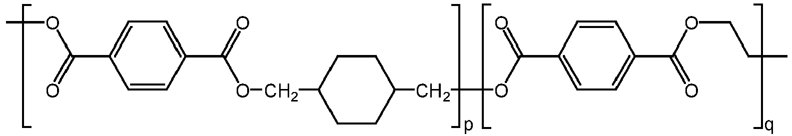 where p is the molar percentage of repeating units derived from CHDM, q is the molar percentage of repeating units derived from ethylene glycol, and p>q, and the polymer may have a weight average molecular weight of up to 100,000.

The polyester having ester linkages can also be ETG polyester. ETG-oligomer has the same structure as CTG-oligomer, except that the ethylene glycol is 50 mole% or more of the diol content. ETG polyester is an abbreviation for a polyester containing ethylene terephthalate, glycol-modified. In some aspects, the polymer having ester linkages can be poly(1,4-cyclohexane-dimethanol-1,4-cyclohexanedicarboxylate), i.e. PCCD, which is a polyester formed from the reaction of CHDM with dimethyl cyclohexane-1,4-dicarboxylate. PCCD has the structure shown below: 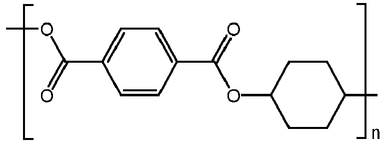 where n is the degree of polymerization, and can be as high as 1,000, and the polymer may have a weight average molecular weight of up to 100,000 g/mol.

The polymer having ester linkages can be poly(ethylene naphthalate), also known as PEN, which has the structure shown below: 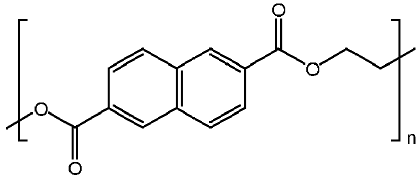 where n is the degree of polymerization, and can be as high as 1,000, and the polymer may have a weight average molecular weight of up to 100,000 g/mol.

The polymer having ester linkages can also be a copolyestercarbonate. A copolyestercarbonate contains two sets of repeating units, one having carbonate linkages and the other having ester linkages. This is illustrated in the structure below: 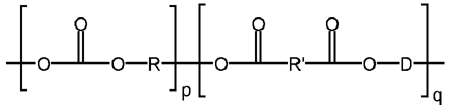 where p is the molar percentage of repeating units having carbonate linkages, q is the molar percentage of repeating units having ester linkages, and p+q=100%; and R, R', and D are independently divalent radicals.

Aliphatic polyesters can also be used. Examples of aliphatic polyesters include polyesters having repeating units of the following formula: 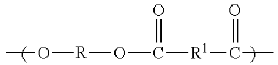 where at least one R or R¹ is an alkyl-containing radical. They are prepared from the polycondensation of glycol and aliphatic dicarboxylic acids.

The polymer compositions of the present disclosure include a polyester component, for example, an ester oligomer or polybutylene terephthalate (PBT). The polyester component may be present at, for example, from about 10 wt. % to about 95 wt. % measured against the total weight of the composition.

### Encapsulated Flame Retardant Agent

The compositions of the present disclosure may comprise an encapsulated flame retardant agent. The encapsulated flame retardant may comprise a coating and a catalytic flame retardant core.

The disclosed coating may be applied to the catalytic flame retardant core via a process of atomic layer deposition (ALD). The ALD process ensures a sufficiently small scale coating that may be adjusted so as to passivate the behavior of the catalytic flame retardant core. The coating may have a thickness of from about 1 nm to about 100 nm measured using scanning electron microscopy. In further examples, the coating may have a thickness of from about 0.3 nm to about 50 nm, or from about 0.35 nm to about 40 nm.

The disclosed coating may comprise silica or alumina applied to the catalytic core via a suitable ALD process.

The catalytic flame retardant core may comprise a phosphorus-based flame retardant additive. The core may comprise a metal salt of a phosphorus-containing compound. The metal salt of a phosphorus-containing compound can comprise at least one of a metal hypophosphite, a metal phosphate, a metal phosphinate, a metal phosphonate, or a metal polyphosphate. The metal of the metal salt can comprise at least one of an alkali metal, an alkali earth metal, aluminum, iron, copper, nickel, or zinc. The metal of the metal salt can comprise at least one of aluminum or zinc. The metal salt of the phosphorus compound can comprise at least one of aluminum phosphate, aluminum phosphinate, cesium potassium phosphate, cesium sodium phosphate, disodium phosphate, monocalcium phosphate, sodium aluminum phosphate, sodium hypophosphite, sodium potassium phosphate, sodium triphosphate, zinc phosphate, zinc phosphinate. The metal salts of the phosphorus compounds can comprise organic groups, for example, the aluminum phosphinate can comprise an organo aluminum phosphinate such as diethyl aluminum phosphinate. As provided herein, an example of a commercially available catalytic compound that can impart flame retardancy is Exolit^{™} OP 1240 commercially available from Clariant.

In some examples, the catalytic flame retardant core may be characterized as an oligomer organophosphorus flame retardant, including for example, bisphenol A diphenyl phosphate (BPADP). In a further example, the flame retardant can be selected from oligomeric phosphate, polymeric phosphate, oligomeric phosphonate, ammonium polyphosphate (Exolit^{™} OP) or mixed phosphate/phosphonate ester flame retardant compositions. The flame retardant can be selected from triphenyl phosphate; cresyl diphenylphosphate; tri(isopropylphenyl)phosphate; resorcinol bis(diphenylphosphate); and bisphenol-A bis(diphenyl phosphate). In an aspect, the flame retardant can comprise bisphenol A bis(diphenyl phosphate) (BPDAP).

### Coupler Component

The compositions of the present disclosure may include a coupler component. In various embodiments, the coupler component may function as chain extender or a cross-linking agent. The coupler component of the present disclosure may comprise at two epoxy groups, which groups may be reacted or unreacted. In an embodiment, the coupler component can be functional, that is, the component may exhibit reactivity with one or more groups of a given chemical structure. As an example, the coupler component described herein may be characterized by one of two reactivities with groups present within the ester oligomer component, i.e., a polyester-comprising chain component. The coupler component may react with 1) a carboxylic acid end group moiety of the chain component or 2) an alcohol end group moiety of the chain component. As described elsewhere herein, a coupler component suitably includes at least two reactive groups; exemplary such reactive groups include epoxy, anhydride, and glycerol/glycerol derivatives. Although many of the non-limiting examples provided herein present epoxy-including coupler components, it should be understood that these examples do not limit the scope of coupler components to coupler components that include only epoxy groups. The coupler component may suitably comprise a flame retardant species, as described elsewhere herein.

The coupler component may comprise at least two reactive groups, e.g., two, three, four, or even more reactive groups. Suitable reactive groups include, for example, epoxy/epoxide groups, anhydride groups, glycerol and/or glycerol derivative groups, and the like. A coupler component may act to crosslink polymer chains, for example, to crosslink polyester chains. A coupler component may also act as a chain extender. In certain embodiments, at least some residual reactive groups (for example, unreacted epoxy groups) of the coupler component remain in the pre-dynamic cross-linked polymer composition. In further embodiments, all reactive groups may be consumed in the formation of the pre-dynamic cross-linked polymer composition.

The coupler component may be a monomer, an oligomer, or a polymer. In an aspect, the coupler component may be multi-functional, that is having at least two epoxy groups. Generally, the epoxy-containing component has at least two epoxy groups, and can also include other functional groups as desired, for example, hydroxyl (-OH). Glycidyl epoxy resins are a particularly preferred epoxy-containing component. In further aspects, the epoxy-containing component may have three, four, five, or more epoxy groups.

A suitable glycidyl epoxy ether is bisphenol A diglycidyl ether (BADGE), which can be considered a monomer, oligomer or a polymer, and is shown below as Formula (A):

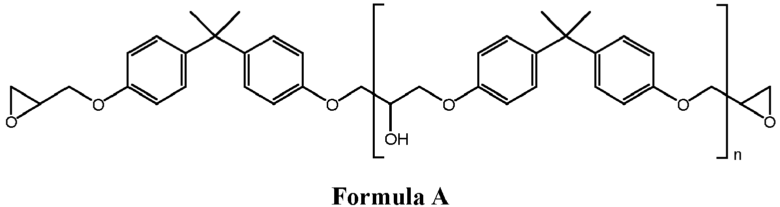

The value of n may be from 0 to 25 in Formula (A). When n=0, this is a monomer. When n=1 to 7, this is an oligomer. When n=8 to 25, this is a polymer. BADGE-based resins have excellent electrical properties, low shrinkage, good adhesion to numerous metals, good moisture resistance, good heat resistance and good resistance to mechanical impacts. BADGE oligomers (where n=1 or 2) are commercially available as D.E.R^{™} 671 from Dow. Novolac resins can be used as coupler component as well. Epoxy resins are illustrated as Formula (B): 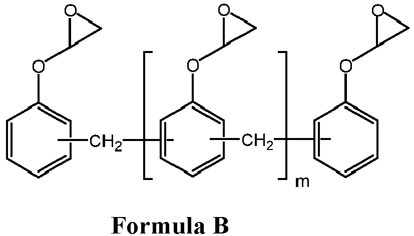 wherein m is a value from 0 to 25.

Another useful coupler component comprising at least two epoxy groups is depicted in Formula C, a cycloaliphatic epoxy (ERL).

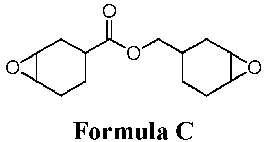

For a monomeric bisphenol A epoxy, the value of n is 0 in Formula (A). When n=0, this is a monomer. In some embodiments of the present disclosure, the BADGE has a molecular weight of about 1000 Daltons and an epoxy equivalent of about 530 g per equivalent. As used herein, the epoxy equivalent is an expression of the epoxide content of a given compound. The epoxy equivalent is the number of epoxide equivalents in 1 g of resin (eq./g). Other suitable monomeric epoxy compounds include diglycidyl benzenedicarboxylate (Formula D) and triglycidyl benzene tricarboxylate (Formula E).

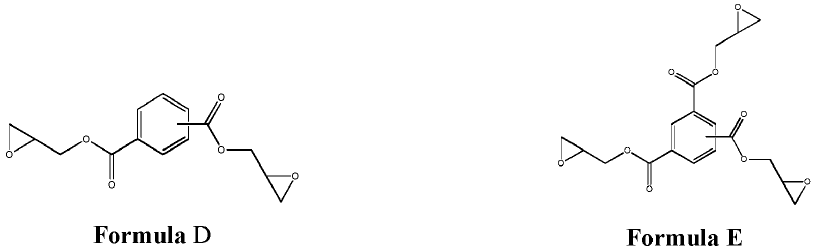

As noted herein, the coupler component is suitably reactive with the alcohol moiety present in the polyester chain component. Such linker components may include a dianhydride compound, such as a monomeric dianhydride compound. The dianhydride compound may facilitate network formation by undergoing direct esterification with the polyester component. In the presence of a suitable catalyst, the dianhydride can undergo ring opening, thereby generating carboxylic acid groups. The generated carboxylic acid groups undergo direct esterification with the alcohol groups of the polyester component.

Another class of a monomeric linker component that is reactive with the alcohol moiety present in the ester oligomer includes dianhydrides. A preferred dianhydride is a pyromellitic dianhydride as provided in Formula F.

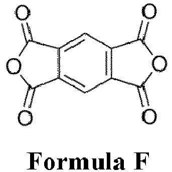

As explained herein, the coupler component may comprise a polymeric composition. For example, the coupler component may comprise a component exhibiting reactivity with the carboxylic groups of the polyester component. These coupler components may include chain extenders having high epoxy functionality. High epoxy functionality can be characterized by the presence of between 200 and 300 equivalent per mol (eq/mol) of glycidyl epoxy groups.

An epoxidized styrene-acrylic copolymer, CESA, represents an exemplary polymeric coupler component. CESA is a copolymer of styrene, methyl methacrylate, and glycidyl methacrylate.

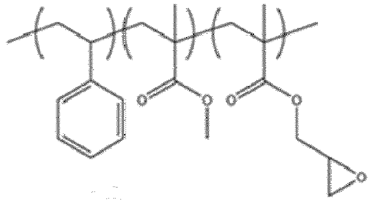

A preferred CESA according to the methods of the present disclosure has average molecular weight of about 6800 g/mol and an epoxy equivalent of 280 g/mol. As used herein, the epoxy equivalent is an expression of the epoxide content of a given compound. The epoxy equivalent is the number of epoxide equivalents in 1 kg of resin (eq./g).

According to various embodiments of the present disclosure, the coupler component may comprise a flame retardant species in addition to the at least two epoxy groups. The coupler component may comprise a flame retardant modified epoxy species. For example, the coupler component may comprise organophosphorus or organobromo modified (or functionalized) flame retardant species.

In some aspects, the coupler component may comprise an organophosphorus functionalized epoxy composition, wherein the organophosphorus moiety (or moieties) performs as a flame retardant species. Here, the particular organophosphorus-modified epoxy compound acts as a network forming additive as well as a flame retardant. A general representation of such a component is illustrated below.

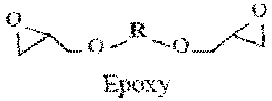

In particular, the R block may correspond to the organophosphorus moiety and may include phosphazenes, phosphates (P(=O)(OR)₃), phosphites (P(OR)₃), phosphonate (RP(=O)(OR)₂), phosphinate (R₂P(=O)(OR)), phosphine oxide (R₃P(=O)), or phosphine (R₃P), or a functionalized (end or side chain) polymeric or oligomer organophosphate according to any of the aforementioned organophosphorus compounds. Each R in the foregoing phosphorus-containing groups can be the same or different, provided that at least one R is an aromatic group. A combination of different phosphorus-containing groups can be used. The aromatic group can be directly or indirectly bonded to the phosphorus, or to an oxygen of the phosphorus-containing group (i.e., an ester). As noted herein, epoxy functionality may be at least two per coupler component.

The coupler component comprising a flame retardant species may include a functionalized organo-bromine compound including polymeric organo-bromine compounds. Examples include tetrabromobisphenol A-tetrabromobisphenol A diglycidyl ether, an epoxy functionalized bromo-polyacrylate or polyacrylate copolymer or an epoxy functionalized brominated polystyrene copolymer. In a specific example, the coupler component may comprise a tetrabromobisphenol A/2,2-Bis-[4-(2,3-epoxypropoxy)-dibromophenyl]-propane copolymer.

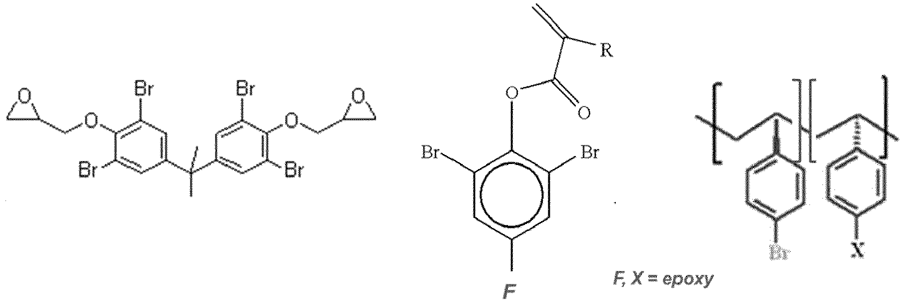

The coupler component may be present as a percentage of the total weight of the composition. In some embodiments, the coupler component comprising at least two epoxy groups may be present in an amount of up to about 20 wt. %, or from 1 wt. % to about 15 wt. %. For example, the coupler component may be present in an amount of about 1, 2, 3, 4, 5, 6, 7, 8, 9, or about 10 wt.%. In one embodiment, the coupler component may be present in an amount of about 10 wt. %.
In certain aspects, a synergist may be included in polymer composition (and/or the synthesis thereof) to supplement the modified epoxy coupler component and flame retardant catalytic core. Suitable inorganic synergist compounds include Sb₂O₅, SbS₃, sodium antimonate and the like. A particular synergist may comprise antimony trioxide (Sb₂O₃). The flame retardant synergist may be present in an amount of up to about 15 wt. %, up to about 10 wt. %, or up to about 4 wt. %. In one example, the flame retardant synergist may be present at about 4 wt. %.

### Additives

One or more additives may be combined with the components of the dynamic or pre-dynamic cross-linked polymer to impart certain properties to the polymer composition. Exemplary additives include: one or more polymers, ultraviolet agents, ultraviolet stabilizers, heat stabilizers, antistatic agents, anti-microbial agents, anti-drip agents, radiation stabilizers, pigments, dyes, fibers, fillers, plasticizers, fibers, non-networking flame retardants, antioxidants, lubricants, impact modifiers, wood, glass, and metals, and combinations thereof.

In certain aspects, a synergist may be included in the pre-dynamic cross-linked polymer composition to supplement the modified epoxy coupler component comprising a flame retardant species.

The compositions described herein may comprise a UV stabilizer for dispersing UV radiation energy. The UV stabilizer does not substantially hinder or prevent cross-linking of the various components of the compositions described herein. UV stabilizers may be hydroxybenzophenones, hydroxyphenyl benzotriazoles, cyanoacrylates, oxanilides, or hydroxyphenyl triazines. The compositions described herein may comprise heat stabilizers. Exemplary heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like; phosphates such as trimethyl phosphate, or the like; or combinations thereof.

The compositions described herein may comprise an antistatic agent. Examples of monomeric antistatic agents may include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

The compositions described herein may comprise anti-drip agents. The anti-drip agent may be a fibril forming or non-fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. A SAN may comprise, e.g., from 50-99 wt.% styrene, and from about 1 to about 50 wt.% acrylonitrile, including all intermediate values. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer.

Exemplary fibers include glass fibers, carbon fibers, polyester fibers, polyamide fibers, aramid fibers, cellulose and nanocellulose fibers or plant fibers (linseed, hemp, sisal, bamboo, etc.) may also be envisaged. In some embodiments, the pre-dynamic cross-linked compositions described herein may comprise a glass fiber filler or other fiber filler. The glass fiber filler may have a diameter of about 1-25 micrometers (µm) and all intermediate values.

Suitable fillers for the compositions described herein include: silica, clays, calcium carbonate, carbon black, kaolin, and whiskers. Other possible fillers include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO2, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Plasticizers, lubricants, and mold release agents can be included. Mold release agent (MRA) allows the material to be removed quickly and effectively. Mold releases can reduce cycle times, defects, and browning of finished product. There is a considerable overlap among these types of materials, which may include, for example, phthalic acid esters; tristearin; di- or polyfunctional aromatic phosphates; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like.

Examples of antioxidant additives include organophosphites such as tris(nonyl phenyl)phosphite, tris(2,4-di-t-butylphenyl)phosphite ("IRGAFOS 168" or "1-168"), bis(2,4-di-t-butylphenyl)pentaerythritol diphosphite, distearyl pentaerythritol diphosphite, tris(dialkylaryl)phosphite, e.g., tris(di-t-butylphenyl)phosphite or tris(di-t-amylphenyl)phosphite, and the bis(dialkylaryl)monoalkylaryl phosphite, e.g., bis(di-t-butylphenyl)mono-t-butylphenyl phosphite or bis(di-t-amylphenyl)mono-t-amylphenyl phosphite, or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

### Properties and Articles

Compositions of the present disclosure demonstrate successful passivation of phosphate based flame retardant additives. Furthermore, these compositions exhibit improved hydrolytic stability, dispersion, and improved handling. Successful passivation may also ensure suppression of toxic gas release.

Articles can be formed from the compositions described herein. Generally, the polycondensation polymer, encapsulated flame retardant additive, and coupler component are combined and heated to provide a molten mixture. The compositions described herein can then form, shaped, molded, or extruded into a desired shape. The term "article" refers to the compositions described herein being formed into a particular shape. It is understood that the subject compositions may be used for various articles and end-use applications.

In one example, an article may comprise the dynamically crosslinked composition. The article can be formed from the dynamically crosslinked composition described herein, on account of their particular composition, may be transformed, repaired, or recycled by raising the temperature of the article. The article comprising the dynamically crosslinked composition may also be recycled by direct treatment of the article, for example, the broken or damaged article is repaired by means of a transformation process and can thus regain its prior working function or another function. Alternatively, the article may be reduced to particles by application of mechanical grinding, and the particles thus obtained may then be used to manufacture a new article. The article may be particularly suitable for use in articles where fatigue resistance is valuable.

### Methods of Manufacture

As provided herein, aspects of the present disclosure relate to compositions comprising a polycondensation polymer and an encapsulated flame retardant additive. The encapsulated flame retardant additive may comprise a catalytic core and a coating deposited at the core via a suitable process of atomic layer deposition (ALD).

There are number of methods of atomic layer deposition known to those skilled in the art. As an example, and not intended to be limiting, in a given ALD process the surface of a substrate onto which a film or coating is to be deposited may be exposed to a dose of vapor comprising a precursor. This vapor dosing may deposit a monolayer. Then any excess of unreacted vapor from that precursor may be pumped away. A vapor dose of a second precursor may be contacted with the surface and allowed to react with the monolayer of the first precursor. This cycle of steps may be repeated to build up the thickness of a coating or film. Suitable examples of some precursors that may be used include, for example SiH₄, NH₃, N₂O, O₂, trimethyl aluminum (TMA), titanium ethoxide, titanium tetrachloride, tetraethoxysilane (TEOS), titanium isopropoxide (TIPT), and tetramethylammonium (TMA). In some embodiments, for example and without limitation, aspects of the present disclosure may feature an encapsulated flame retardant agent comprising a silica coating deposited at a catalytic core substrate via a tetraethoxysilane (TEOS) precursor for SiO₂ or an alumina coating deposited via a TMA precursor.

The coating may be deposited at the catalytic core via an ALD process such that the coating has a thickness of from about 1 nm to about 100 nm, or from about 0.3 nm to about 50 nm, or from about 0.35 nm to about 40 nm.

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (for example, the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects, the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

The present disclosure may be described by the following aspects.
Aspect 1. A polymer composition comprising: a polycondensation polymer; and
   an encapsulated flame retardant agent, wherein the encapsulated flame retardant agent comprises a coating and a catalytic flame retardant core and wherein the coating has a thickness of from about 1 nm to about 100 nm observed using scanning electron microscopy.
Aspect 2. The composition of claim 1, wherein the encapsulated flame retardant agent is present in an amount of from about 7 wt. % to 20 wt. % based on the total weight of the polymer composition.
Aspect 3. The composition of any one of claims 1-2, wherein the coating comprises a silica or alumina deposited via a method of atomic layer deposition.
Aspect 4. The composition of any one of claims 1-3, further comprising a coupler component comprising a plurality of epoxy-functionalized compounds.
Aspect 5. A polymer composition comprising: from about 0.1 wt. % to about 94 wt. % of a polycondensation polymer; and from about 5 wt. % to about 25 wt. % of an encapsulated flame retardant agent, wherein: the encapsulated flame retardant agent comprises a silica coating and a catalytic flame retardant core, the silica coating has a thickness of from about 1 nm to about 100 nm, a ratio of phosphorus to silica is from about 5:1 to 100:1, and wherein the combined weight percent value of all components does not exceed 100 wt. %, and all weight percent values are based on the total weight of the polymer composition.
Aspect 6. The composition of claim 5, wherein the composition further comprises from about 0.01 wt. % to about 20 wt. % of a coupler component comprising a plurality of epoxy functionalized compounds.
Aspect 7. The composition of any one of claims 1-6, wherein the catalytic flame retardant core comprises at least one of at least one of a metal acetylacetonate, a tin compound, benzyldimethylamide, benzyltrimethyl ammonium chloride, a metal acetate, a metal salt of a saturated or unsaturated fatty acid, a metal oxide, a metal alkoxide, a metal alcoholate, a sulfonic acid, a phosphine, an organic compound, a phosphazene, or metal salt of a phosphorus containing compound.
Aspect 8. The composition of any one of claims 1-7, wherein the catalytic flame retardant core comprises at least one of a metal hypophosphite, a metal phosphate, a metal phosphinate, a metal phosphonate, or a metal polyphosphate.
Aspect 9. The composition of any one of claims 1-8, wherein the catalytic flame retardant core comprises at least one of sodium triphosphate, aluminum phosphate, sodium aluminum phosphate, monocalcium phosphate, disodium phosphate, zinc phosphate, aluminum phosphate, sodium potassium phosphate, cesium sodium phosphate, cesium potassium phosphate, sodium hypophosphite, aluminum phosphinate, zinc phosphinate, or sodium triphosphate.
Aspect 10. The composition of any one of claims 1-7, wherein the coating of the encapsulated flame retardant is deposited via a method of atomic layer deposition.
Aspect 11. The composition of any one of claims 3-8, wherein the ratio of silicium of the coating to catalytic flame retardant core defined as P/Si is from about 5 to 100.
Aspect 12. The composition of any one of claims 3-9, wherein a silicon content of the encapsulated flame retardant agent is from about 0.01 wt. % to about 2 wt. % based on a total weight of the encapsulated flame retardant agent.
Aspect 13. The composition of any one of claims 1-10, wherein the plurality of epoxy functionalized compounds comprises at least one of a glycidyl ether comprising at least two epoxy groups or a novolac phenolic resin.
Aspect 14. The composition of any one of claims 1-11, wherein a mole ratio of hydroxyl and epoxy groups from the plurality of epoxy functionalized compounds to the ester groups in the polyester is 0.01:100 to 30:100.
Aspect 15. The composition of any one of claims 1-14, wherein the polycondensation polymer comprises a polyester.
Aspect 16. The composition of any one of claims 1-14, wherein the polycondensation polymer comprises a polyester selected from an aliphatic polyester, a poly(alkylene terephthalate) (for example, poly(butylene terephthalate), poly(propylene terephthalate), or poly(ethylene terephthalate)), a poly(cyclohexylenedimethylene terephthalate), or a poly(alkylene naphthalate), or a combination thereof.
Aspect 17. The composition of any one of claims 1-16, wherein the encapsulated flame retardant comprises a plurality of heat-treated core-shell particles.
Aspect 18. An article comprising the polymer composition of any one of claims 1-17.

Various combinations of elements of this disclosure are encompassed by this disclosure, e.g., combinations of elements from dependent claims that depend upon the same independent claim.

The following examples are provided to illustrate the compositions, processes, and properties of the present disclosure. The examples are merely illustrative and are not intended to limit the disclosure to the materials, conditions, or process parameters set forth therein.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt.%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

To assess the performance of an encapsulated organic aluminum phosphinate flame retardant additive, several samples were prepared via atomic layer deposition. A series of alumina (Al₂O₃) coated Exolit^{™} OP 1240 powder particles were prepared via atomic layer deposition using a trimethylaluminum TMA precursor and a series of silica encapsulated Exolit^{™} powder particles were also prepared via atomic layer deposition using a tetraethyl orthosilicate (TEOS) or silicium tetrachloride (SiCl₄) precursor.

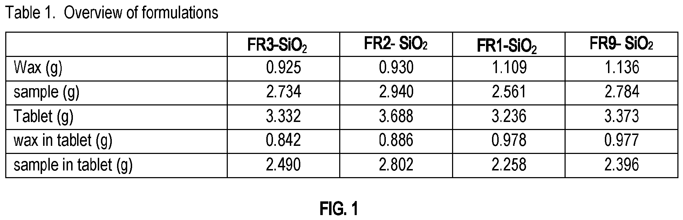

The samples were assessed for their aluminum, silicon, phosphorous, and sulfur content using XRF. Samples were prepared as presented in Table 1 (shown in FIG. 1).

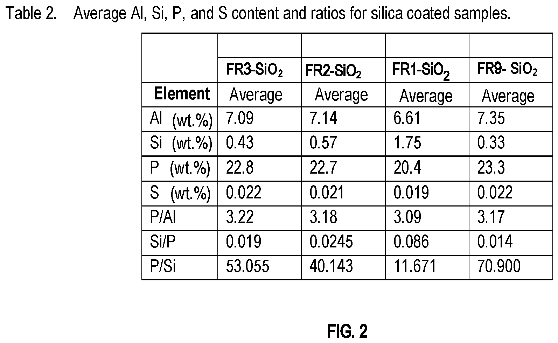

Table 2 (shown in FIG. 2) presents the average content by element Al, Si, P, and S for each sample observed via X-ray fluorescence spectroscopy with 1,2-dimethoxyethane (C₁₂H₃₀O₆) used as balance and Compton validation factor of 1.07. Also presented are ratios for P:Al, Si:P, and P:Si.

The coating of the samples was also characterized via scanning electron microscopy with energy dispersive X-ray (SEM-EDX) analysis. Powder samples were dispersed on a carbon tape without further preparation. Other samples were cryo-fractured. The samples were imaged at 25 kV with a current probe of 8, and at a magnification of 200 times (200 X). The mapping mode was used, and the images were acquired during approximately 300 seconds approximately. For FR1-SiO₂, the Exolit^{™} particles were clearly seen in the P and Al signal. The Si signals were slightly above the noise signal, which suggested a very thin coating layer. Only few particles showed a stronger signal suggesting a heterogeneous coating. For FR2-SiO₂, the Si signals are slightly stronger compared with that of FR1-SiO₂, which is consistent with the increased of number of ALD cycles and a thicker layer. For FR3-SiO₂, the Si signals were significantly increased as compared to FR1-SiO₂ and FR2-SiO₂.

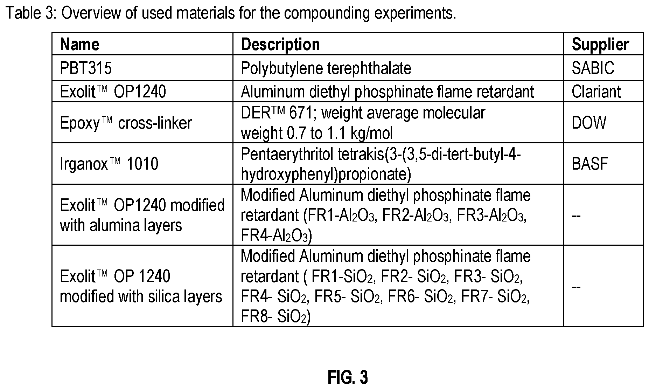

Table 3 (shown in FIG. 3) presents the materials used for the formulations.

Compounding of the samples with polyester in the presence of an epoxy was performed using a DSM Xplore micro-compounder unit (MCU). The cross-linking reaction of PBT with epoxy was used as an example to demonstrate the feasibility of passivation of the reactive surface of the Exolit^{™} OP 1240 flame retardant additive. Formulations containing a standard (non-encapsulated) Exolit^{™} OP 1240 flame retardant additive and the modified (alumina or silica encapsulated) Exolit^{™} OP1240 with varying layer thicknesses were introduced in the MCU and the torque development was followed as a function of time at a compounding temperature of 260 °C using a screw speed of 100 rpm. The maximum mixing time was set at 12 minutes, unless the maximum torque was reached and the screw speed needed to be reduced to zero.

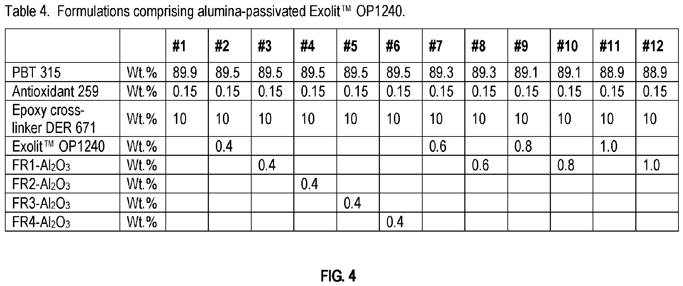

Table 4 (shown in FIG. 4) presents the formulations comprising the alumina-coated FR agent.

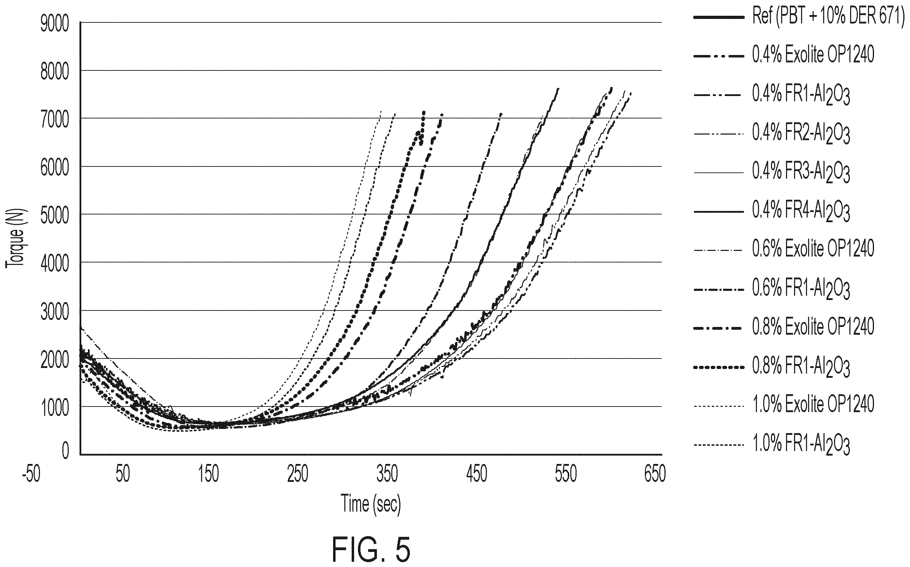

In the first analysis, the target was to determine the effect of encapsulation with alumina using concentrations that are conventionally used for transesterification to cross-link the PBT with the epoxy. A graphical illustration of the torque build-up as a result of the cross-linking reaction for the formulations of Table 4 is shown in FIG. 5 as the torque development as a function of time. The cross-linking reaction was followed by the increase in torque. A maximum torque is allowed at 8000 N before the viscosity increase because the reaction requires that the machine was stopped.

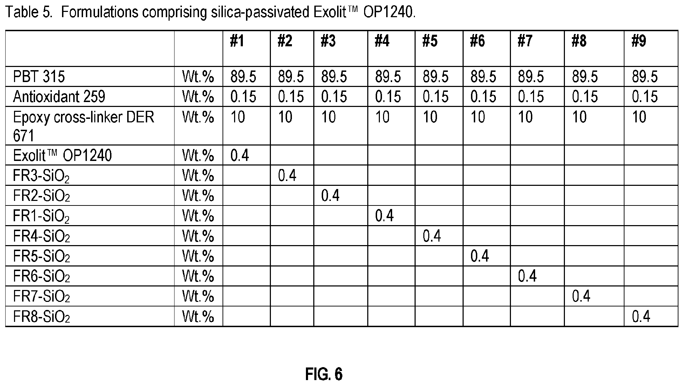

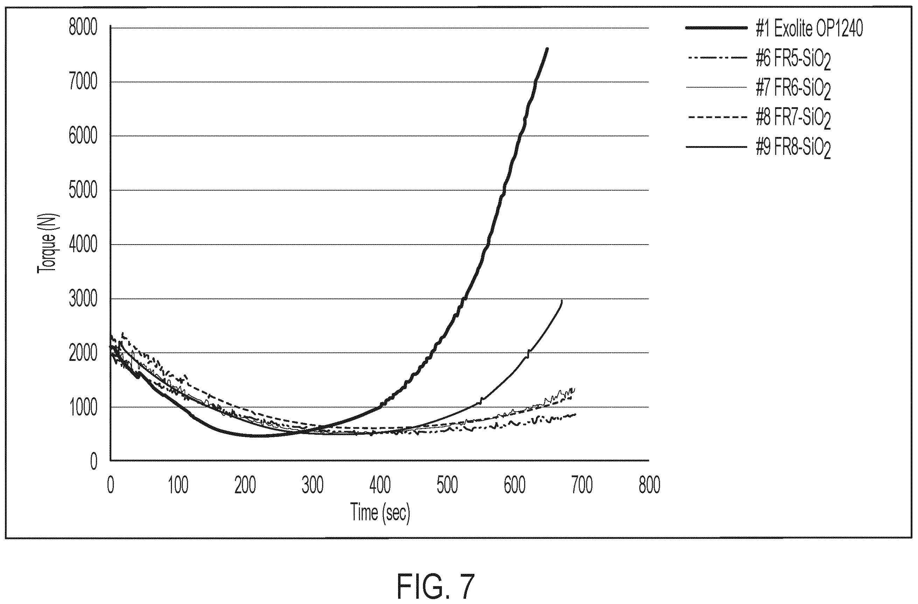

In the second analysis, the effects of silica encapsulation were observed using concentrations that are conventionally used for transesterification to cross-link the PBT with the epoxy. Table 5 (shown in FIG. 6) presents the formulations comprising the silica coated Exolit^{™} OP1240 flame retardant additive. FIG. 7 is a graphical illustration of the torque build-up as a result of the cross-linking reaction for the formulations of Table 5. The cross-linking reaction was followed by the increase in torque. A maximum torque is allowed at 8000 N before the viscosity increase because the reaction requires that the machine was stopped.

As shown, torque is significantly lower than the Exolit^{™} OP 1240 flame retardant additive (sample #1). Less networking occurred and is demonstrated in the curves as they show it took longer before reaction started. The encapsulated Exolit^{™} OP 1240 was less reactive and thus, successfully passivated.

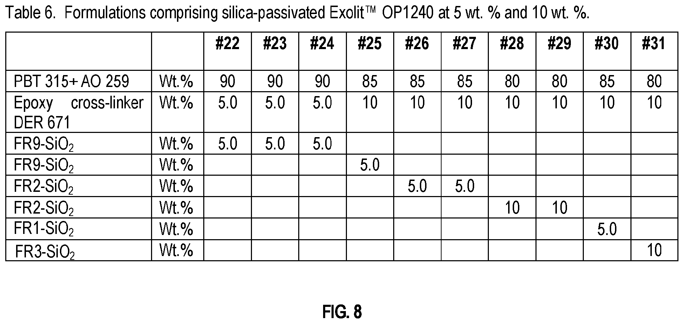

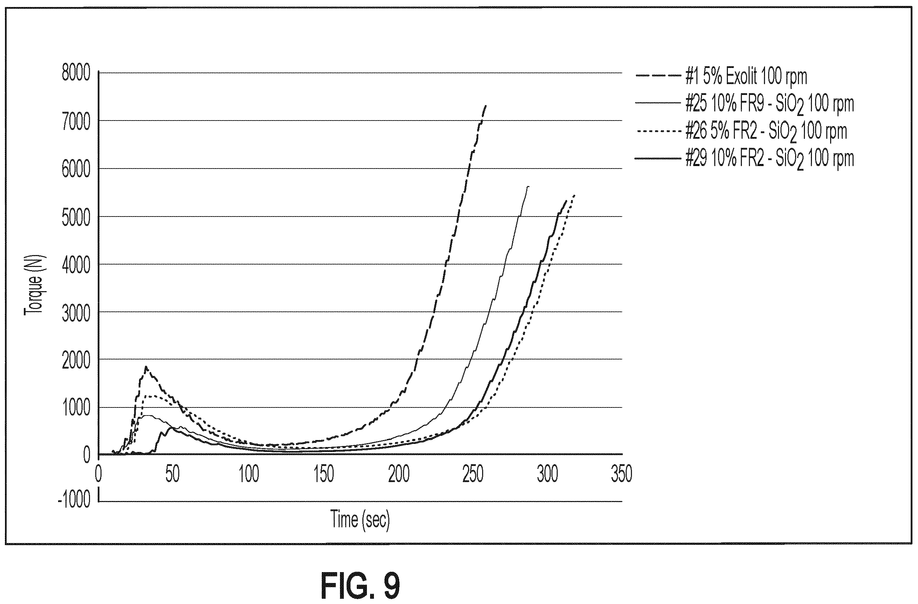

In a third analysis, the amount of silica encapsulated Exolit^{™} OP 1240 flame retardant additive was increased towards concentrations typically used in flame retardant formulations. Table 6 (shown in FIG. 8) presents these formulations. FIG. 9 shows the torque as a function of time. To illustrate the different effects that can be achieved with the passivation reactions FIG. 3 gives an overview, from which it is evident that the reactions can be suppressed by hundreds of seconds at Exolit^{™} loadings that are typical for FR formulations.

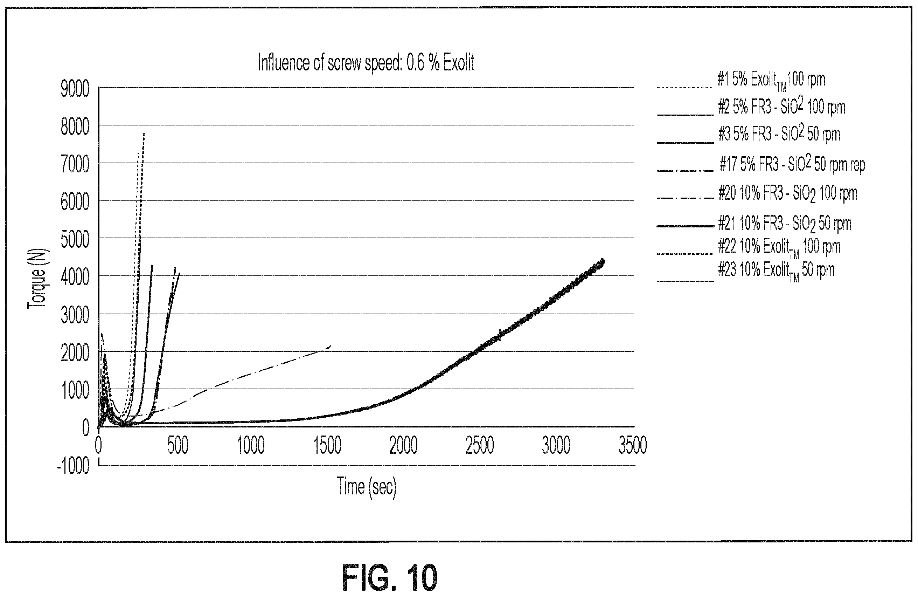

The influence of the screw speed on FR agent passivation was investigated. To illustrate the different effects that can be achieved with the passivation reactions FIG. 10 gives an overview, from which it is evident that the reactions can be suppressed by hundreds of seconds.

For comparative purposes, a series of samples including an encapsulated flame retardant agent were prepared featuring a silica coating deposited according to a non-ALD method. A sol-gel method was performed to deposit a silica coating at Exolit^{™} OP 1240 flame retardant additive to provide comparative encapsulated FR agent CFR- SiO₂. In a two-neck round-bottom flask, 100 g of catalytic compound was added to 900 ml of ethanol, 200 ml of deionized water, 6 g of Tween 80, and 6 g of Span 80. The slurry was continuously stirred for 30 minutes. A volume of 60 ml of tetraethoxysilane was added drop by drop, followed by the addition of 83 mL of ammonia. Subsequently, the suspension was heated at 60 °C for 1 hour. The encapsulated catalytic compound CFR- SiO₂ was then isolated by centrifugation or filtration, washed with ethanol and deionized water, and dried. These sample thicknesses were generally less than µm consistent with sol-gel chemistry. The thickness of the encapsulation layer achieved by using the sol-gel chemistry is typically larger than 1 micrometer.

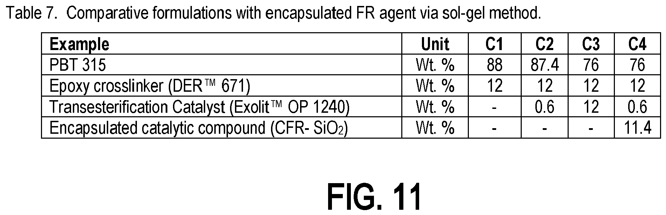

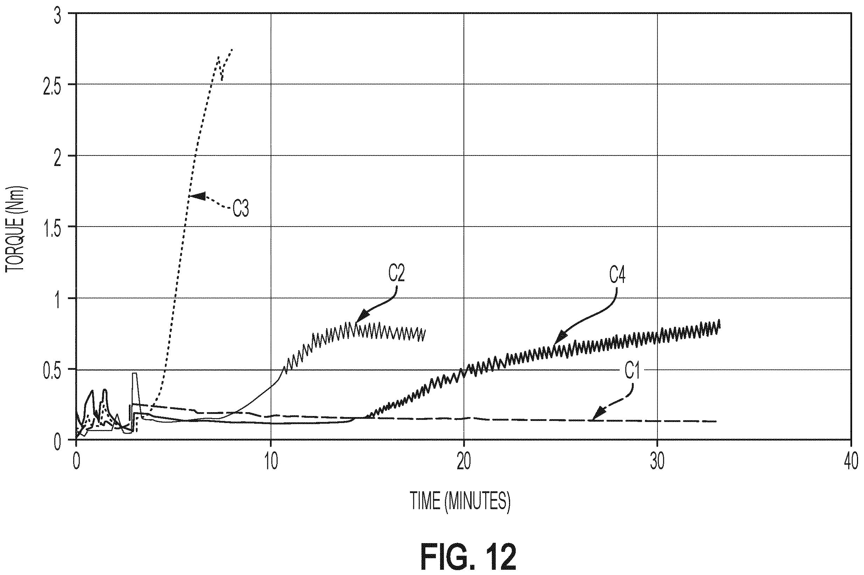

Formulations were prepared and are listed in Table 7 (shown in FIG. 11). The formulations were compounded in the melt using a twin screw micro compounder equipped with a plunger for barrel feeding. The temperature of the mixer elements (twin-screws) was set to 230 °C. The compositions were mixed at constant speed of 100 rpm unless otherwise indicated. During the mixing the (screw) torque was monitored for Comparative Examples C1-C4 and a plot of Screw Torque versus time is depicted in FIG. 12.

The sol-gel encapsulated FR agent also results in a delay of torque buildup as evidenced by C4 when compared to C1 through C3. There is reduced catalytic activity and thus a delay in the crosslinking as described above. The torque behavior of C1 showed there was no cross-linking occurring without the catalyst or encapsulated FR agent. C1 also corresponds to the reference in FIG. 9 above. C2 showed an increase in torque and then leveling off, but cross-linking didn't keep going. C3 showed a steep increase and then torque stopped. The equipment must be stopped at this point or it is damaged around 8000 N. C4 showed further and more gradual delay. However, when compared to the torque of the inventive samples shown in FIG. 3, there is a significant difference in torque behavior for the compositions comprising the encapsulated FR agent coated via an ALD process compared to the sol-gel encapsulated sample C4. These curves demonstrated that not only was cross-linking reaction delayed, but also the reaction rate after the inhibition time interval was strongly suppressed. Without wishing to be bound by any particular theory, it was apparent for the sol-gel encapsulated FR agent, the amount of Exolit^{™} flame retardant additive was reduced. The sol-gel method may add a layer of fully condensed silica, but in the process it removes the aluminum diethyl-phosphinate of Exolit^{™} 1240 (DEPAL). Thus, this behavior was attributed to the reduced availability or amount of Exolit^{™} flame retardant additive. This differed from the ALD encapsulated FR Exolit^{™} flame retardant additive, where only a delay in the start of the reaction was observed, but there was no observed influence on the reaction rate of the crosslinking reaction. This behavior demonstrated that the surface was passivated but could become active at higher temperature. Furthermore, for the ALD encapsulated Exolit^{™} flame retardant additive or for another comparable flame retardant additive, layer thickness could control the duration of passivity.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

## Claims

1. A polymer composition comprising:
a poly condensation polymer; and
an encapsulated flame retardant agent, wherein the encapsulated flame retardant agent comprises a coating and a catalytic flame retardant core and wherein the coating has a thickness of from about 1 nm to about 100 nm observed using scanning electron microscopy.

2. The composition of claim 1, wherein the encapsulated flame retardant agent is present in an amount of from about 7 wt. % to 20 wt. % based on the total weight of the polymer composition.

3. The composition of any one of claims 1-2, wherein the coating comprises a silica or alumina deposited via a method of atomic layer deposition.

4. The composition of any one of claims 1-3, further comprising a coupler component comprising a plurality of epoxy-functionalized compounds.

5. A polymer composition comprising:
from about 0.1 wt. % to about 94 wt. % of a poly condensation polymer;
and
from about 5 wt. % to about 25 wt. % of an encapsulated flame retardant agent,
wherein:
the encapsulated flame retardant agent comprises a silica coating and a catalytic flame retardant core,
the silica coating has a thickness of from about 1 nm to about 100 nm,
a ratio of phosphorus to silica is from about 5:1 to 100:1, and
wherein the combined weight percent value of all components does not exceed 100 wt. %, and all weight percent values are based on the total weight of the polymer composition.

6. The composition of claim 5, wherein the composition further comprises from about 0.01 wt. % to about 20 wt. % of a coupler component comprising a plurality of epoxy functionalized compounds.

7. The composition of any one of claims 1-6, wherein the catalytic flame retardant core comprises at least one of at least one of a metal acetylacetonate, a tin compound, benzyldimethylamide, benzyltrimethyl ammonium chloride, a metal acetate, a metal salt of a saturated or unsaturated fatty acid, a metal oxide, a metal alkoxide, a metal alcoholate, a sulfonic acid, a phosphine, an organic compound, a phosphazene, or metal salt of a phosphorus containing compound.

8. The composition of any one of claims 1-7, wherein the catalytic flame retardant core comprises at least one of a metal hypophosphite, a metal phosphate, a metal phosphinate, a metal phosphonate, or a metal polyphosphate.

9. The composition of any one of claims 1-8, wherein the catalytic flame retardant core comprises at least one of sodium triphosphate, aluminum phosphate, sodium aluminum phosphate, monocalcium phosphate, disodium phosphate, zinc phosphate, aluminum phosphate, sodium potassium phosphate, cesium sodium phosphate, cesium potassium phosphate, sodium hypophosphite, aluminum phosphinate, zinc phosphinate, or sodium triphosphate.

10. The composition of any one of claims 1-7, wherein the coating of the encapsulated flame retardant is deposited via a method of atomic layer deposition.

11. The composition of any one of claims 3-8, wherein the ratio of silicium of the coating to catalytic flame retardant core defined as P/Si is from about 5 to 100.

12. The composition of any one of claims 1-11, wherein the poly condensation polymer comprises a polyester.

13. The composition of any one of claims 1-12, wherein the poly condensation polymer comprises a polyester selected from an aliphatic polyester, a poly(alkylene terephthalate) (for example, poly(butylene terephthalate), poly(propylene terephthalate), or poly(ethylene terephthalate)), a poly(cyclohexylenedimethylene terephthalate), or a poly(alkylene naphthalate), or a combination thereof.

14. The composition of any one of claims 1-13, wherein the encapsulated flame retardant comprises a plurality of heat-treated core-shell particles.

15. An article comprising the polymer composition of any one of claims 1-14.
